(19) Europäisches Patentamt
European Patent Office
Office européen des brevets

(11) Publication number: 0 163 819 B1

(12) # EUROPEAN PATENT SPECIFICATION

(45) Date of publication of patent specification: 06.02.91

(51) Int. Cl.$^5$: **H 01 B 3/44**, H 01 B 3/30, C 08 K 5/00, C 08 K 3/00

(21) Application number: 85102724.3

(22) Date of filing: 09.03.85

(54) **Polyolefin compounds having improved thermal stability and conductors coated therewith.**

(30) Priority: 19.03.84 US 590603

(43) Date of publication of application:
11.12.85 Bulletin 85/50

(45) Publication of the grant of the patent:
06.02.91 Bulletin 91/06

(84) Designated Contracting States:
DE FR GB IT

(56) References cited:
EP-A-0 045 957
WO-A-83/00488
AU-B- 522 219
BE-A- 897 157
FR-A-2 346 398
FR-A-2 398 372
FR-A-2 398 373
US-A-3 860 676
US-A-4 247 446
US-A-4 373 048

CHEMICAL ABSTRACTS, vol. 92, no. 8, Columbus, OH (US); p. 37, no. 59726u

The file contains technical information submitted after the application was filed and not included in this specification

(73) Proprietor: Vulkor, Incorporated
950 Broadway
Lowell, Massachusetts 01854 (US)

(72) Inventor: Betts, Joseph Elwood
44 Park Lane
Westport, CT 06880 (US)
Inventor: Fridland, Ida
35 Christine Drive
Huntington, CT 06611 (US)
Inventor: Wilkus, Edward Vincent
44 Park Lane
Westport, CT 06880 (US)

(74) Representative: Patentanwälte Müller-Boré, Deufel, Schön, Hertel, Lewald, Otto
Postfach 26 02 47 Isartorplatz 6
D-8000 München 26 (DE)

EP 0 163 819 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

## Background of the Invention

Polyolefin polymers have been used as components of curable insulation compositions that are extruded onto electrical conductors and cured by heat. The prior art has recognized the desirability of adding stabilizers and flame retardants to polyolefin compositions to prevent thermal degradation of the base polymer and to avoid introducing flammable insulating materials into commercial or domestic environments. For example, to be economical and practical, polyolefin insulation systems used for electrical conductors such as building wire, electric motor wire, home appliance wire, underground power transmitting cables should be durable and retain their initial physical properties.

It is well known that the normal operating temperatures encountered in the environments that electrical devices are used are sufficiently elevated that oxidative degradation can be expected to occur. This phenomenon is commonly called "thermal aging".

The use of flame retardant agents to impart flame retardant properties to polyolefins is also well known in the art. It is also known that the addition of flame retardants can adversely affect thermal stability. The debilitating oxidative deterioration of polymeric compositions, such as physical embrittlement and cracking, is a subject of vast and intensive concern and has been the subject of substantial research activity. For example, U.S. Patent Nos. 3,819,410 and 3,879,180 are concerned with the problem of polymer oxidation and provide a number of proposed solutions. U.S. Patent No. 4,260,661 describes the use of a sterically hindered di-tertiary butyl phenol with at least one zinc salt of a mercaptoimidazole selected from the group consisting of a zinc salt of 2-mercaptobenzimidazole or a zinc salt of 2-mercaptotolylimidazole.

WO—A—8300488 discloses a flame retardant polyethylene composition comprising 0—20 and preferably 5—10 parts by weight of a lead compound.

## Summary of the Invention

The present invention provides a novel insulation composition which comprises:

| | | parts by weight |
|---|---|---|
| (a) | an ethylene containing polymer as a polyolefin resin; | 100 |
| (b) | ethylene-bis(tetrahalophthalimide) as a halogenated flame retardant | 5—50 |
| (c) | an antimony compound; | 1—25 |
| (d) | a lead compound; | 0.25—2.5 |
| (e) | a sterically hindered phenol | 0.5—10 |
| | in combination with at least one zinc salt of a mercaptoimidazole selected from 2-mercaptobenzimidazole and 2-mercaptotolylimidazole; and | 1—20 |
| (f) | a peroxide cross-linking agent | 1—5 |

The relative proportions of the composition other than the polyolefin are described in terms of parts by weight per 100 parts by weight of the polyolefin resin. These compositions have high thermal oxidative resistance and high flame retardance.

## Objects of the Invention

This invention is concerned with providing polyolefin insulating compositions that have high thermal stability and enhanced flame retardant properties.

A further object of this invention is to provide polyolefin insulating compositions that have high thermal stability and have a flame retardant rating of VW-1 as determined by Underwriters Laboratory Flame Travel Test 758.

It is also an object of this invention to provide flame retardant polyolefin insulating compositions that have a thermal stability rating that exceeds 150°C.

It is also an object of this invention to provide flame retardant polyolefin insulating compositions that have a thermal stability rating that exceeds 150°C and enhanced flame retardance before and after a period of thermal aging.

It is also an object of this invention to provide flame retardant polyolefin insulating compositions that have a thermal stability in excess of 150°C and a flame retardant rating of VW-1 as determined by Underwriters Laboratory Flame Travel Test 758.

It is also an object of this invention to provide novel insulated electrical conductors having improved thermal and flame retardant properties.

## Brief Description of the Drawing

FIG. 1 is a perspective view of a conductor that is electrically insulated with a composition according to the present invention.

## Detailed Description of the Invention

The compositions of the invention comprise a curable or thermosettable polyolefin composition that is flame retardant and thermally stable and may be converted by the use of a peroxide and heat, radiation or electron beams to a thermoset condition.

The polyolefin resins include high and low density polyethylene, linear low density polyethylene, copolymers of ethylene and other polymerizable materials, and blends of polymers or copolymers of ethylene with other polymeric materials. Suitable copolymers of ethylene comprise ethylene-vinyl acetate, ethylene-propylene rubber and ethylene-propylene terpolymers (EPDM) and ethylene-acrylic copolymers. These polymers comprise a major component of ethylene. For example, an ethylene-propylene copolymer or terpolymer will contain at least about 50% by weight of ethylene and generally about 50 to 75% thereof. Copolymers of ethylene and vinyl acetate contain about 70 to 95% by weight of ethylene.

The ethylene-containing polymers may also be blended with chlorine containing polymers such as chlorinated polyethylene, chlorosulfonated polyethylene or polyvinyl chloride. It should be understood that the use of halogenated polymers will reduce the total amount of auxiliary flame retardant additives required.

The halogenated flame retardant compounds that may be employed in the practice of the invention are ethylene-bis(tetrahalophthalimides).

The preferred halogenated flame retardant is ethylene-bis(tetrabromophthalimide).

The type of antimony compound is not critical and it may be organic or inorganic. For example organic compounds may use antimony esters, cyclic alkyl antimonites and aryl antimonic acids. Other compounds that may be used include KSb tartrate; Sb caproate, $Sb(OCH_2CH_3)_3$; Sb $(OCH(CH_3)CH_2CH_3)_3$; Sb polymethylene glycolate; triphenyl antimony. Inorganic antimony compounds include antimony oxide, $Sb_4O_6$ or $Sb_2O_3$; $NH_4SbF_6$; $SbS_3$; antimony chloride, $SbCl_3$; antimony phosphate. The preferred antimony compound is antimony oxide.

The lead compound may be an organic or inorganic compound. It may be a lead salt of an organic acid such as lead acetate; lead propionate, dibasic lead phthalate, and other liquid and solid organolead compounds. Inorganic lead compounds such as lead oxides, lead carbonates, lead sulfates and lead phosphates may be employed. The preferred lead compound is dibasic lead phthalate.

The sterically hindered phenols for use in the practice of the invention are well known and many are commercially available.

The most preferred such compounds are of the formula:

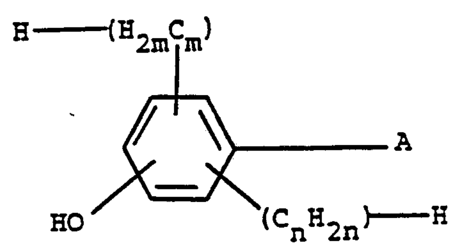

wherein m and n are 0 to 6 and A is

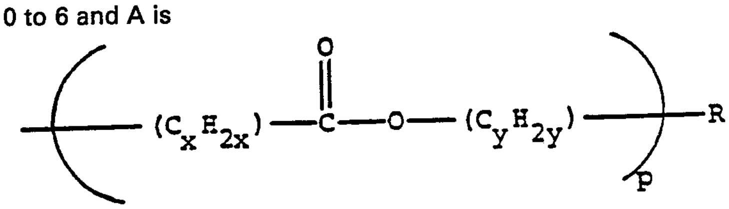

wherein p is from 1 to 6, x is from 0 to 6, y is from 0 to 30 and R is hydrogen, a tetravalent carbon radical or a mono- to hexa-valent hydrocarbon radical of from 1 to 12 carbon atoms; or

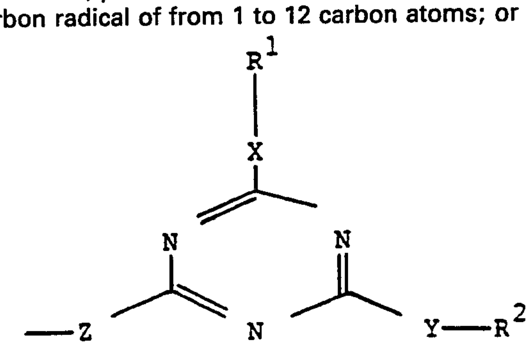

wherein each of $R^1$ and $R^2$ is selected from

$$-(C_zH_{2z}S)_q-C_rH_{2r+1} \quad \text{or}$$

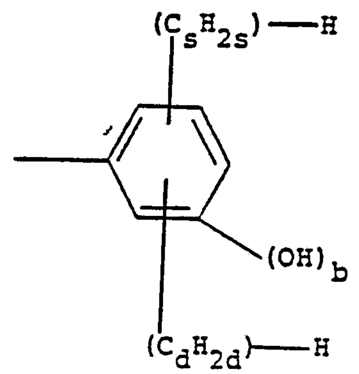

and each of X, Y and Z is selected from —O—, —S— or

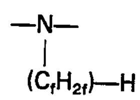

in which each of s and d is from 0 to 6, each of f and r is from 0 to 30, z is from 2 to 6, q is 0 to 3 and b is 0 or 1.

The preferred phenolic compounds thus include phenolic carboxylic acids, phenolic alkyl carboxylic acids, esters of such acids and phenolic substituted 1,3,5-triazine derivatives. The hydrocarbon substituents on the phenolic ring will be straight or branched chain of from one to six carbon atoms, such as methyl, ethyl, n-propyl, i-propyl, n-butyl, t-butyl, n-pentyl, 2,3-dimethylbutyl and n-hexyl. Preferably, in the compounds of the above formula, the phenol group will be a dialkyl phenolic group in which at least one alkyl group is in a position ortho to the hydroxy group. The other alkyl group is either (a) in the other position ortho to the hydroxy group or (b) meta to the hydroxy group and para to the first alkyl group. Although not so limited, the alkyl groups substituted on the phenol ring are preferably branched groups such as t-butyl.

Within the family of phenolic compounds are preferred species, such as tetrakis-[methylene(3′,5′-di-t-butyl-4′-hydroxy)-hydrocinnamate]methane; 2,4-bis-(octylthio)-1,3,5-triazine, each of which can be made by means known to those skilled in this art and which, respectively, are available from Ciba-Geigy Corp., Ardsley, New York, under product designations IRGANOX® 1010, 1093 and 1035. Especially preferred is tetrakis (methylene 3-(3′,5′-di-tert-butyl-4′-hydroxyphenyl)propionate)methane.

The zinc salt of a mercaptoimidazole component of the combination of this invention comprises a zinc salt of 2-mercaptobenzimidazole sold under the trade designation Vulkanox® ZMB by Mobay Chemical, or a zinc salt of 2-mercaptotolylimidazole sold under the trade designation Vanox® ZMTI by R. T. Vanderbilt or Vulkanox® ZMB-2 by Mobay Chem.

Peroxide crosslink curing agents for the various curable compositions of this invention comprise the free radical forming organic peroxides such as tertiary peroxides characterized by at least one unit of the structure

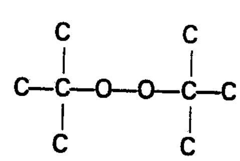

which is activated by its decomposition at temperatures in excess of about 145°C (295°F) the use of such peroxides in crosslinking polymers is described in detail in U.S. Pat. Nos. 2,888,424; 3,079,370; and 3,214,422. A commonly used and preferred curing agent for this invention is dicumyl peroxide. Other useful peroxide curing agents include the tertiary diperoxides such as 2,5-dimethyl-2,5-(t-butyl)peroxy)hexane, and 2,5-dimethyl-2,5-di(t-butyl-peroxy)hexyne-3, mixture of para and meta isomers of α,α′-bis(t-butyl peroxy) diisopropyl benzene (Vul-Cup-R).

The use of a peroxide curing coagent in the crosslinking of the novel composition of this invention is strongly preferred to increase the efficiency of the cure in accordance with the technology in this art. Apt curing coagents include, for example, trimethylol propane, trimethacrylate and other esters of metacrylic acid such as ethylene glycol dimethacrylate and 1,3-butyl glycol dimethylacrylate. Additional examples of coagents are set forth in an article entitled "Evaluation Of Cross-linking Coagents In Ethylene-Propylene

Rubber" by Lenas, I&EC Produce Research & Development, Volume 2, No. 3, September, 1963, pages 202—208.

A high molecular weight polydimethylsiloxane gum may be added to the composition. These gums are commercially available in combination with silica reinforcing fillers. The composition may include colloidal silicas having a high surface area such as fumed silica, precipitated silica, silica aerogel. These materials are well known and are commercially available as Cabosil® M-S7 or H-S5.

The compositions of the invention may comprise the following components which are based on the ethylene polymer content being 100 parts by weight and each component being calculated as parts by weight per 100 parts of ethylene polymer.

| | |
|---|---|
| ethylene polymer | 100 |
| halogenated flame retardant | 10—35 |
| antimony compound | 1—25 |
| zinc salt of 2-mercaptobenzimidazole or 2-mercaptotolylimidazole | 1—20 |
| hindered phenolic antioxidant | 0.5—12 |
| lead compound | 0.25—2.5 |
| dimethylpolysiloxane gum | 1—7.5 |
| fumed colloidal silica | 0.5—10 |
| peroxide | 1—5 |

The above relative proportions are given for guidance in the practice of the invention. It is understood that other components such as pigments and processing aids may also be used in the compositions of the invention.

Without being bound by the theory of why the compositions of the invention have outstanding thermal and flame retardant properties, these results are believed to be achieved by the use of a minor amount of a lead compound in combination with the antimony compound as well as the other stabilizers. The applicants have observed that an antimony compound, i.e. antimony oxide in the presence of hot carbon char, which is primarily carbon, will be reduced to elemental antimony metal that takes the form of exfoliating, fragile tree like branches. When a minor amount of a lead compound, such as di-basic lead phthalate, is combined with antimony oxide, and hot carbon char, the antimony is reduced with the lead compound and apparently forms a lead-antimony alloy that can be visualized as a cohesive continuum of metal that is believed to enhance the flame retardant test performance of compositions that contain these materials. Based on empirical data, it is believed that the use of high amounts of lead will adversely affect heat age resistance. For this reason only an amount of a lead compound should be used which is effective to enhance the flame retardant qualities of polymeric compositions which contain a halogenated flame retardant and an antimony compound.

The components of the composition of the invention may be mixed using any conventional compounding method or apparatus such as a Banbury mixer of a two roll rubber mill. All of the materials may be combined and mixed except if a heat decomposable peroxide curing agent is added, it should be added separately while controlling the heat. A method of curing the composition is described in U.S. 4,260,661.

## Description of the Preferred Embodiments

The following examples illustrate the invention. They are set forth as a further description, but are not to be construed as limiting the invention thereto.

Example 1

A composition is prepared which includes the following materials:

| | PHR* |
|---|---|
| Ethylene vinyl acetate copolymer (9% vinyl acetate) | 100.0 |
| Ethylene-bis(tetrabromophthalimide) | 30.0 |
| Antimony oxide | 15.0 |
| Dibasic lead phthalate | 1.5 |
| Alumina trihydrate | 10.0 |
| Tetrakis (methylene-3(3′,5′-di-tert-butyl-4′-hydroxyphenyl) propionate) methane (Irganox® 1010) | 3.5 |
| Zinc salt of 2-mercaptotolylimidazole (Vanox® ZMTI) | 7.0 |
| Dimethylpolysiloxane gum | 3.0 |
| Dicumyl peroxide (Dicup R) | 4.0 |

* parts per hundred parts of resin

All of the powder components except for the dicumyl peroxides are first placed in a Banbury mixer before the resin component is added. The composition is thoroughly mixed at an elevated temperature and transferred to a two roll rubber mill where they are milled and sheeted off in 1.7 cm (¼″) sheets. The dicumyl peroxide is added using a roll rubber mill with cooling to keep the batch temperature below about 90°C (190°F) and strips from the mill into a pelletizer where it is cut into 1.7 × 1.7 cm (¼″ × ¼″) pellets. The pellets are then used in an extruder to coat tinned copper wire #20 AWG which is subsequently cured by exposure to steam at about 205°C (406°F) for about 1.25 minutes.

Example 2 (Control)

Using the general procedure of Example 1, the following composition was prepared and a 760 µm (30 mil) thick coating was applied and cured onto tinned copper wire:

| | PHR |
|---|---|
| Low density polyethylene (Exxon Chemical Co. LD-405.8) | 100 |
| Tetrabromodiphenyl ether | 30 |
| Antimony oxide | 15 |
| Zinc salt of 2-mercaptotolylimidazole | 8 |
| tetrakis(methylene-3)3′,5′-di-tert-butyl-4′-hydroxyphenyl)propionate) methane (Irganox® 1010) | 4 |
| Dibasic lead phthalate | 1.5 |
| Dimethylpolysiloxane gum (high molecular weight silica) Reinforced gum CE 902 GE Co.) | 5 |
| Fumed colloidal silica (Cabosil®) MS-7) | 5 |
| Peroxide (para and meta isomers of α,α′-bis (t-butyl peroxy) diisopropyl benzene) (Vulcup-R) | 3 |

The coated wire was tested for thermal stability flame retardant properties and the results are reported in Table 1.

Example 3

Using the general procedure of Example 1, the following composition was prepared and a 760 mm (30 mil) thick coating was cured onto tinned copper wire:

| | PHR |
|---|---|
| Low density polyethylene (Exxon Chemical Co. LD-405.8) | 100 |
| Ethylene-bis (tetrabromophthalimide) | 30 |
| Antimony oxide | 15 |
| Zinc salt of 2-mercaptotolylimidazole | 8 |
| tetrakis (methylene-3(3′,5′-di-tert-butyl-4′-hydroxyphenyl)propionate) methane | 4 |
| Dibasic lead phthalate | 1.5 |
| Dimethylpolysiloxane gum (high molecular weight silica reinforced gum CE 902 GE Co.) | 5 |
| Fumed colloidal silica (Cabosil® MS-7) | 5 |
| Trimethylolpropane methacrylate (Sartomer Resin-SR 350) | 1 |
| Peroxide (para and meta isomers of α,α′-bis-t-butylperoxy)diisopropyl benzene (Vulcup-R) | 3 |

The coated wire was tested for thermal stability and flame retardant properties and the results are reported in Table 1.

Examples 4 and 5

Using the general procedure of Example 1, the following compositions were prepared and a 760 μm (30 mil) coating was cured onto tinned copper wire:

| | Example 4 PHR |
|---|---|
| Low density polyethylene (USI-NA-300-00) and low molecular weight polyethylene (microfine powder) MFI 22 (FN-500) (US Industries) (90:10 wt. ratio) | 100 |
| Ethylene bis(tetrabromophthalimide) | 30 |
| Antimony oxide | 15 |
| Di-basic lead phthalate | 1.5 |
| Fumed colloidal silica (Cabosil® MS-7) | 5 |
| Tetrakis(methylene-3(3′,5′-di-tert-butyl-4′-hydroxyphenyl)propionate) (Irganox®) 1010) | 4 |
| Zinc salt of 2-mercaptotolylimidazole | 8 |
| Dimethylpolysiloxane gum (high molecular weight silica reinforced gum CE 902 GE Co.) | 5 |
| Trimethylol propane trimethacrylate (Sartomer resin SR-350) | 1 |
| Peroxide (para and meta isomers of α,α′-bis-t-butyl peroxy)diisopropyl benzene) Vulcup-R | 3 |

| | Example 5* |
|---|---|
| | PHR |
| Ethylene vinylacetate copolymer | 100 |
| Condensation product of 2 moles of hexachloro-cyclopentadiene and 1 mole of cyclooctadiene (Dechlorane Plus 25) | 35 |
| Antimony oxide | 17 |
| Tetrakis (methylene-3(3',5'-di-tert-butyl-4'-hydroxyphenyl) propionate (Irganox® 1010) | 2 |
| Zinc salt of 2-mercaptobenzimidazole | 4 |
| Zinc stearate | 2 |
| Dicumyl peroxide | 4 |

* Control

The coated wires were tested for thermal stability and flame retardant properties and the results are reported in Table 1.

Control Example A

Using the general procedure of Example 1, the following composition was prepared and a 760 µm (30 mil) coating was cured onto tinned copper wire.

| | PHR |
|---|---|
| Low density polyethylene (USI-NA-300.00) and low molecular weight polyethylene (microfine powder) MFR 22 (FN-500) (US Industries) (90:10 wt. ratio) | 100 |
| Decabromodiphenyl ether | 30 |
| Antimony oxide | 15 |
| Di-basic lead phthalate | 5 |
| Fumed colloidal silica | 5 |
| Thiodiethylene-bis-(3',5'-di-tert-butyl-4-hydroxy) hydrocinnamate (Irganox® 1035) | 3 |
| Zinc salt of 2-mercaptotolylimidazole | 3 |
| Dimethylpolysiloxane gum (high molecular weight silica Reinforced gum CE 902 GE Co.) | 5 |
| Dibasic lead stearate (predispersed at a concentrate of 65% by weight on EPDM) DSE (DS207) D-65 Wyrough & Loser | 1 |
| Tri-allyl cyanurate | 1 |
| Peroxide (para and meta isomers of α,α'-bis-t-butyl peroxy)diisopropyl benzene (Vulcup-R) | 3 |

The coated wire was tested for thermal stability and flame retardant properties and the results are reported in Table 1.

TABLE 1

The wire samples were thermally aged in an oven at 231°C for 15 hours and 24 hours respectively. Thereafter they were tested according to UL 62 flexible cord and fixture wire VW-1 flame test using a 30 cm (12") length of wire that is supported in the vertical position. The test sample is contacted with a bunsen burner flame for 15 seconds and withdrawn until the sample self-extinguishes or fifteen seconds after withdrawal whichever is later; the ignition sequence is repeated four additional times. A test failure is recorded by (a) the test sample does not self-extinguish in one minute; (b) particles from the test sample fall on and ignite a bed of cotton below the wire; or (c) a "flag" mounted on top of the test sample burns.

| | Ignition No.* 1 | 2 | 3 | 4 | 5 | Falling Particles | Ignite Cotton | Ignite Flag | UD to Flag** | Result |
|---|---|---|---|---|---|---|---|---|---|---|
| Example 1 | 0 | 6 | 2 | 0 | 0 | no | no | no | 6.0 | pass |
| aged 15 h | 1 | 1 | 1 | 0 | 0 | no | no | no | 6.5 | pass |
| at 231°C | 0 | 8 | 1 | 0 | 0 | no | no | no | 6.5 | pass |
| Control | | | | | | | | | | |
| Example 2 | 23 | 25 | 0 | 0 | 0 | no | no | singed | 3.0 | barely pass |
| aged 15 h | 22 | 13 | 0 | 0 | - | no | no | singed | 3.5 | barely pass |
| at 231°C | 22 | 45 | - | - | - | no | no | singed | - | fail |
| Control | | | | | | | | | | |
| Example 2 | >60 | - | - | - | - | (Burned all the way) | | | | fail |
| aged 24 h | >60 | - | - | - | - | (Burned all the way) | | | | fail |
| at 231°C | | | | | | | | | | |
| Example 3 | 1 | 4 | 0 | 0 | - | no | no | no | 5 1/2 | pass |
| aged 15 h | 1 | 5 | 0 | 0 | - | no | no | no | 5 3/4 | pass |
| at 231°C | 0 | 3 | 0 | 0 | - | no | no | no | 6.0 | pass |
| Example 3 | 1 | 11 | 0 | 0 | - | no | no | no | 5 1/2 | pass |
| aged 24 h | 1 | 28 | 0 | 0 | - | no | no | no | 3 1/2 | pass |
| at 231°C | 2 | 1 | 0 | 0 | - | few | no | no | 6.0 | pass |
| Example 4 | 0 | 30 | 6 | 2 | 0 | no | no | no | 5.0 | pass |
| aged 15 h | 0 | 25 | 0 | 0 | 0 | no | no | no | 5.5 | pass |
| at 231°C | 0 | 33 | 2 | 0 | 0 | no | no | no | 4.5 | pass |
| Example 5*** | >60 | - | - | - | - | (Burned all the way) | | | | fail |
| aged 15 hr | >60 | - | - | - | - | (Burned all the way) | | | | fail |
| at 231°C | >60 | - | - | - | - | (Burned all the way) | | | | fail |
| Control | >60 | - | - | - | - | (Burned all the way) | | | | fail |
| Example A | >60 | - | - | - | - | (Burned all the way) | | | | fail |
| aged 15 h | >60 | - | - | - | - | (Burned all the way) | | | | fail |
| at 231°C | | | | | | | | | | |

* time in seconds
** denotes unburned distance to flag (in inches)
*** control

The composition proportions are based on the ethylene polymer content being 100 parts by weight and each component being defined as parts by weight per hundred parts by weight of the ethylene polymer.

## Claims

1. A curable, flame retardant insulating composition which comprises:
(a) 100 parts by weight of an ethylene containing polymer;
(b) 5—50 parts by weight of ethylene-bis(tetrahalophthalimide);
(c) 1—25 parts by weight of an antimony compound
(d) from 0.25 to 2.5 parts by weight of a lead compound;
(e) 0.5—10 parts by weight of a sterically hindered phenol in combination with 1—20 parts by weight of at least one zinc salt of a mercaptoimidazole selected from the group consisting of a zinc salt of 2-mercaptobenzimidazole and a zinc salt of 2-mercaptotolyl-imidazole; and
(f) 1—5 parts by weight of a peroxide curing agent.

2. A curable, flame retardant insulating composition as defined in Claim 1 wherein the ethylene containing polymer is selected from the group consisting of polyethylene; copolymers of ethylene and vinyl acetate; copolymers of ethylene and propylene; and terpolymers of ethylene and propylene with a diene.

3. A curable, flame retardant insulating composition as defined in Claim 2 wherein the ethylene bis(tetrahalophthalimide) is ethylene bis(tetrabromophthalimide).

4. A curable, flame retardant insulating composition as defined in Claims 2 or 3 wherein the antimony compound is an inorganic antimony compound.

5. A curable, flame retardant insulating composition as defined in Claim 4 wherein the antimony compound is antimony oxide.

6. A curable, flame retardant insulating composition as defined in Claims 2 or 3 wherein the lead compound is an organic lead compound.

7. A curable, flame retardant insulating composition as defined in Claim 6 wherein the lead compound is dibasic lead phthalate.

8. A curable, non-dripping flame retardant composition as defined in Claim 1 wherein the peroxide curing agent is dicumylperoxide.

9. A conductor bearing a layer of cured insulation composition of Claim 1.

10. A conductor bearing a layer of cured insulation as defined in Claim 9 wherein the ethylene polymer is selected from the group consisting of polyethylene; copolymers of ethylene and vinyl acetate; copolymers of ethylene and propylene; and terpolymers of ethylene and propylene with a diene.

11. A conductor bearing a layer of cured insulation as defined in Claim 10 wherein the ethylene-bis-(tetrahalophthalimide) is ethylene-bis(tetrabromophthalimide).

12. A conductor bearing a layer of cured insulation as defined in Claim 11 wherein the antimony compound is an inorganic antimony compound.

13. A conductor bearing a layer of cured insulation as defined in Claim 12 wherein the inorganic antimony compound is antimony oxide.

14. A conductor bearing a layer of cured insulation as defined in Claim 13 wherein the organic lead compound is dibasic lead phthalate.

15. A curable, flame retardant insulating composition which consists essentially of:

| | PHR |
|---|---|
| low density polyethylene and low molecular weight polyethylene 90:10; | 100 |
| ethylene bis(tetrabromophthalimide); | 30 |
| antimony oxide; | 15 |
| di-basic lead phthalate; | 1.5 |
| fumed colloidal silica; | 5 |
| tetrakis(methylene-3(3',5'-di-tert-butyl-4'-hydroxyphenyl)propanate); | 4 |
| zinc salt of 2-mercaptotolylimidazole; | 8 |
| dimethylpolysiloxane gum; | 5 |
| trimethylol propane trimethacrylate; and | 1 |
| *p* and *m*-isomers of bis-tert-butyl peroxy) diisopropyl benzene | 3 |

**Patentansprüche**

1. Eine härtbare, flammverzögernde Isoliermasse, dadurch gekennzeichnet, daß sie enthält:
(a) 100 Gew.-Teile eines ethylenhaltigen Polymeren;
(b) 5—50 Gew.-Teile an Ethylen-bis(tetrahalogenphthalimid);
(c) 1—25 Gew.-Teile einer Antimonverbindung;
(d) 0,25—2,5 Gew.-Teile einer Bleiverbindung;
(e) 0,5—10 Gew.-Teile eines sterisch gehinderten Phenols in Kombination mit 1—20 Gew.-Teilen an wenigstens einem Zinksalz eines Mercaptoimidazols aus der Gruppe Zinksalz von 2-Mercaptobenzimidazol und Zinksalz von 2-Mercaptotolylimidazol; und
(f) 1—5 Gew.-Teile eines peroxidischen Härtungsmittels.

2. Härtbare, flammverzögernde Isoliermasse nach Anspruch 1, dadurch gekennzeichnet, daß das ethylenhaltige Polymere aus der Gruppe Polyethylen, Copolymere von Ethylen und Vinylacetat, Copolymere von Ethylen und Propylen und Terpolymere von Ethylen und Propylen mit einem Dien gewählt ist.

3. Härtbare, flammverzögernde Isoliermasse nach Anspruch 2, dadurch gekennzeichnet, daß das Ethylen-bis(tetrahalogenphthalimid) Ethylen-bis(tetrabromphthalimid) ist.

4. Härtbare, flammverzögernde Isoliermasse nach Anspruch 2 oder 3, dadurch gekennzeichnet, daß die Antimonverbindung eine anorganische Antimonverbindung ist.

5. Härtbare, flammverzögernde Isoliermasse nach Anspruch 4, dadurch gekennzeichnet, daß die Antimonverbindung Antimonoxid ist.

6. Härtbare, flammverzögernde Isoliermasse nach Anspruch 2 oder 3, dadurch gekennzeichnet, daß die Bleiverbindung eine organische Bleiverbindung ist.

7. Härtbare, flammverzögernde Isoliermasse nach Anspruch 6, dadurch gekennzeichnet, daß die Bleiverbindung dibasisches Bleiphthalat ist.

8. Härtbare, flammverzögernde Isoliermasse nach Anspruch 1, dadurch gekennzeichnet, daß das peroxidische Härtungsmittel Dicumylperoxid ist.

9. Leiter mit einer Schicht aus gehärteter Isoliermasse nach Anspruch 1.

10. Leiter mit einer Schicht aus gehärteter Isolation nach Anspruch 9, dadurch gekennzeichnet, daß das Ethylenpolymere aus der Gruppe Polyethylen, Copolymere von Ethylen und Vinylacetat, Copolymere von Ethylen und Propylen und Terpolymere von Ethylen und Propylen mit einem Dien gewählt ist.

11. Leiter mit einer Schicht von gehärteter Isolation nach Anspruch 10, dadurch gekennzeichnet, daß das Ethylen-bis(tetrahalogenphthalimid) Ethylen-bis(tetrabromphthalimid) ist.

12. Leiter mit einer Schicht von gehärteter Isolation nach Anspruch 11, dadurch gekennzeichnet, daß die Antimonverbindung eine anorganische Antimonverbindung ist.

13. Leiter mit einer Schicht von gehärteter Isolation nach Anspruch 12, dadurch gekennzeichnet, daß die anorganische Antimonverbindung Antimonoxid ist.

14. Leiter mit einer Schicht von gehärteter Isolation nach Anspruch 13, dadurch gekennzeichnet, daß die organische Bleiverbindung dibasisches Bleiphthalat ist.

15. Härtbare, flammverzögernde Isoliermasse, dadurch gekennzeichnet, daß sie im wesentlichen besteht aus:

| | Teile/100 Teile Harz (PHR) |
|---|---|
| Polyethylen niedriger Dichte und Polyethylen mit niederem Molekulargewicht 90:10; | 100 |
| Ethylen-bis(tetrabromphthalimid); | 30 |
| Antimonoxid; | 15 |
| dibasisches Bleiphthalat; | 1,5 |
| hochdisperses kolloidales Siliziumdioxid; | 5 |
| Tetrakis(methylen-3-(3',5'-di-tert-butyl-4'-hydroxyphenyl)propanat); | 4 |
| Zinksalz von 2-Mercaptotolylimidazol; | 8 |
| Dimethylpolysiloxan-Kautschuk; | 5 |
| Trimethylolpropantrimethacrylat; und | 1 |
| *p*- und *m*-Isomere von bis-(tert-Butyl-peroxy)-diisopropylbenzol | 3 |

**Revendications**

1. Composition isolante, durcissable et ignifuge, comprenant:
(a) 100 parties en poids d'un polymère contenant de l'éthylène;
(b) de 5 à 50 parties en poids d'un bis(tétrahalophtalimide) d'éthylène;
(c) de 1 à 25 parties en poids d'un composé d'antimoine;
(d) de 0,25 à 2,5 parties en poids d'un composé de plomb;
(e) de 0,5 à 10 parties en poids d'un phénol à empêchement stérique, combiné avec 1 à 20 parties en poids d'au moins un sel de zinc d'un mercaptoimidazole choisi parmi le groupe comprenant un sel de zinc de 2-mercaptobenzimidazole et un sel de zinc de 2-mercaptotolylimidazole; et
(f) de 1 à 5 parties en poids d'un agent de cuisson de peroxyde.

2. Composition isolante, durcissable et ignifuge selon la revendication 1, caractérisé en ce que le polymère contenant de l'éthylène est choisi parmi le groupe comprenant le polyéthylène, des copolymères d'éthylène et d'acétate de vinyle, des copolymères d'éthylène et de propylène, et des terpolymères d'éthylène et de propylène avec un diène.

3. Composition isolante, durcissable et ignifuge selon la revendication 2, caractérisée en ce que le bis(tétrahalophtalimide) d'èthylène est un bis(tétrabromophtalimide) d'éthylène.

4. Composition isolante, durcissable et ignifuge selon la revendication 2 ou 3, caractérisée en ce que le composé d'antimoine est un composé d'antimoine inorganique.

5. Composition isolante, durcissable et ignifuge selon la revendication 4, caractérisée en ce que le composé d'antimoine est un oxyde d'antimoine.

6. Composition isolante, durcissable et ignifuge selon la revendication 2 ou 3, caractérisée en ce que le composé de plomb est un composé de plomb organique.

7. Composition isolante, durcissable et ignifuge selon la revendication 6, caractérisée en ce que le composé de plomb est un phtalate de plomb dibasique.

8. Composition durcissable, non ruisselante et ignifuge selon la revendication 1, caractérisée en ce que l'agent de cuisson de peroxyde est le peroxyde de dicumyle.

9. Conducteur portant une couche de composition isolante durcie selon la revendication 1.

10. Conducteur portant une couche d'isolation durcie selon la revendication 9, caractérisé en ce que le polymère d'éthylène est choisi parmi le groupe comprenant le polyéthylène, des copolymères d'éthylène et d'acétate de vinyle, des copolymères d'éthylène et de propylène, et des terpolymères d'éthylène et de propylène avec un diène.

11. Conducteur portant une couche d'isolation durcie selon la revendication 10, caractérisé en ce que le bis(tétrahalophtalimide) d'éthylène est un bis(tétrabromophtalimide) d'éthylène.

12. Conducteur portant une couche d'isolation durcie selon la revendication 11, caractérisé en ce que le composé d'antimoine est un composé d'antimoine inorganique.

13. Conducteur portant une couche d'isolation durcie selon la revendication 13, caractérisé en ce que le composé d'antimoine inorganique est l'oxyde d'antimoine.

14. Conducteur portant une couche d'isolation durcie selon la revendication 13, caractérisé en ce que le composé de plomb organique est du phtalate de plomb bibasique.

15. Composition isolante, durcissable et ignifuge selon la revendication, caractérisée en ce qu'elle est essentiellement constituée de:

| | Parties pour 100 parties de résine |
|---|---|
| Polyéthylène de faible densité et polyéthylène de faible poids moléculaire (90:10) | 100 |
| bis(tétrabromophtalimide) d'éthylène | 30 |
| oxyde d'antimoine | 15 |
| phtalate de plomb dibasique | 1,5 |
| silice colloïdale fumée | 5 |
| tétrakis(méthylène-3-(3',5'-di-tert-butyl-4'-hydroxyphényl)propanate) | 4 |
| sel de zinc de 2-mercaptotolylimidazole | 8 |
| gomme de diméthylpolysiloxane | 5 |
| triméthacrylate de triméthylolpropane | 1 |
| et *p* et *m*-isomères de bis-(tert-butyl-peroxy)diisopropylbenzène | 40 |

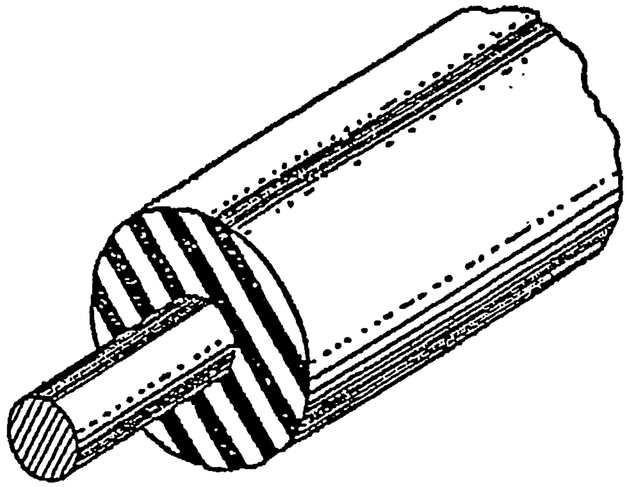

Fig. 1